# EUROPEAN PATENT APPLICATION

(11) **EP 4 718 830 A1**
(43) Date of publication of application: **01.04.2026**
(21) Application number: 25201080.6
(22) Date of filing: 09.09.2025
(51) Int. Cl.: H04N 1/00

(54) **A COMPUTER PROGRAM FOR CONTROL DEVICE, CONTROL DEVICE AND METHOD**

(30) Priority: 25.09.2024 JP 2024166601
(71) Applicant: BROTHER KOGYO KABUSHIKI KAISHA, Aichi-ken 467-8561 (JP)
(72) Inventor: HATA, Megumi, Nagoya, 467-8562 (JP)
(74) Representative: Kuhnen & Wacker Patent- und Rechtsanwaltsbüro PartG mbB

(57) **Abstract**

A control device (30) may include a display control unit (32) configured to cause a terminal device (10) to display a predetermined screen (SC2) related to an image processing device (10), wherein in a case where the image processing device has not registered for any of a plurality of shipping services for shipping a consumable article used in the image processing device, the predetermined screen is displayed in a first mode capable of receiving operation to use any of the plurality of shipping services by a user of the terminal device, and in a case where the image processing device has registered for a specific shipping service among the plurality of shipping services, the predetermined screen is displayed in a second mode that permits use of the specific shipping service by the user and restricts use of other shipping services than the specific shipping service among the plurality of shipping services.

## Description

### TECHNICAL FIELD

This specification is related to a technology for displaying a screen to a terminal device.

### BACKGROUND ART

Japanese Patent Application No. 2017-068722 discloses Shipping services of shipping consumable articles.

### SUMMARY

There may be a plurality of shipping services. It is sufficient for a user to be able to use one service among the plurality of shipping services. The disclosure herein provides a technology for prompting a user to use a specific service among a plurality of shipping services.

A computer program (42) for a control device (30) is disclosed herein. The computer program (42) may cause a processor (32) of the control device (30) to function as: a display control unit (32) configured to cause a terminal device (10) to display a predetermined screen (SC2) related to an image processing device (100) communicable with the terminal device (10), wherein in a case where the image processing device (10) has not registered for any of a plurality of shipping services for shipping a consumable article used in the image processing device (100), the predetermined screen (SC2) is displayed in a first mode capable of receiving operation to use any of the plurality of shipping services by a user of the terminal device (10), and in a case where the image processing device (100) has registered for a specific shipping service among the plurality of shipping services, the predetermined screen (SC2) is displayed in a second mode that permits use of the specific shipping service by the user and restricts use of other shipping services other than the specific shipping service among the plurality of shipping services.

For example, a comparative example is assumed where the predetermined screen can receive operation to use any of the plurality of shipping services by the user in the case where the image processing device has already registered for the specific shipping service. In this comparative example, the user may start using another shipping service despite the image processing device having already registered for the specific shipping service. Contrary to this, in the above configuration, the predetermined screen restricts the use of other shipping services by the user in the case where the image processing device has already registered for the specific shipping service. This prevents the user from starting to use another shipping service. Thus, the user is prompted to use the specific service among the plurality of shipping services.

A control device comprising the recording medium described above and a controlling method for the control device are also novel and useful. The recording medium described above may be a single medium or a combination of multiple media.

### BRIEF DESCRIPTION OF DRAWINGS

FIG. 1 is a schematic diagram of a communication system.
FIG. 2 is a flowchart of a setup process.
FIG. 3 is a flowchart of a post-setup process.
FIG. 4 is a diagram illustrating various screens.
FIG. 5 is a flowchart of a home screen display process.
FIG. 6 is a diagram illustrating modifications of a home screen.

### DESCRIPTION

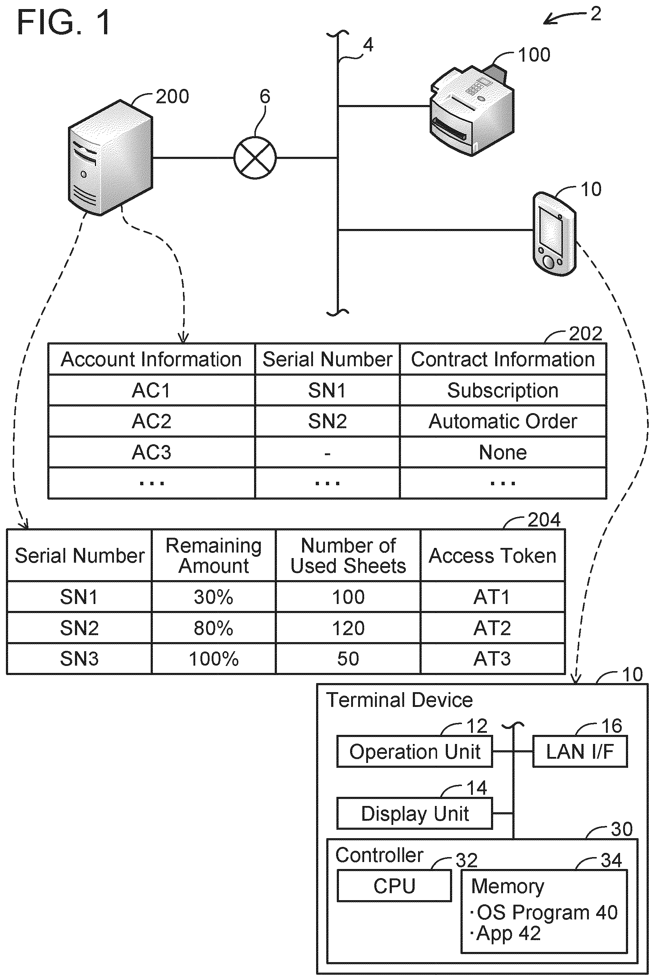

### Configuration of Communication System 2: FIG. 1

A communication system 2 comprises a terminal device 10, an MFP 100, and a service server 200. MFP stands for multifunction peripheral. The terminal device 10 may be, for example, a laptop PC, a smartphone, a tablet terminal, or a desktop PC. The MFP 100 is a peripheral device of the terminal device 10 and is configured to execute multiple functions such as a print function and a scan function.

The MFP 100 comprises a print execution unit configured to execute the print function. The print execution unit comprises a print engine of inkjet scheme, electrophotographic scheme, or thermal scheme. A print engine of inkjet scheme comprises a print head configured to discharge drops of ink. A print engine of electrophotographic scheme comprises, for example, a photoreceptor and an exposure device configured to emit light to expose the photoreceptor to the light. A print engine of thermal scheme comprises a print head configured to emit heat generated by a heater. Further, the MFP 100 comprises a scan execution unit configured to execute the scan function. The scan execution unit comprises a scanner engine including an image sensor of, for example, CCD (charge-coupled device) image sensor scheme or CIS (contact image sensor) scheme.

The terminal device 10 and the MFP 100 are connected to a local area network (LAN) 4. The LAN 4 is a wired LAN or a wireless LAN. The LAN 4 is connected to the internet 6. The service server 200 is connected to the internet 6. The terminal device 10 and the MFP 100 are communicable with the service server 200 via the LAN 4 and the internet 6. The service server 200 is established on the internet 6, for example, by the vendor of the MFP 100. The number of peripheral devices connected to the LAN 4 is not limited to one, and two or more peripheral devices (e.g., multiple MFPs 100) may be connected to the LAN 4.

The service server 200 provides a subscription service and an automatic order service. The subscription service charges the base fee in case the number of print sheets used within a predetermined period of time (e.g., one month) is equal to or less than the upper limit of available print sheets (e.g., 100 sheets), while the subscription service charges, in case the number of print sheets used within the predetermined period of time exceeds the upper limit, a sum of the base fee and an additional fee for the excess print sheets used. In other words, the subscription service permits service users to use print sheets up to the upper limit within the predetermined period of time at the basic fee. The subscription service includes an automatic shipping service. The automatic shipping service is a service of automatically shipping a new cartridge when a remaining amount of color material (e.g., ink, toner, etc.) in a color material cartridge mounted in the MFP 100 reaches a predetermined amount or less. The price of a new cartridge is included in the base fee of the subscription service.

The automatic order service is a service of automatically ordering a new cartridge when a remaining amount of color material in a color material cartridge mounted in the MFP 100 reaches a predetermined amount or less. The automatic order service does not have a monthly base fee and charges the price of a new cartridge every time it is ordered. Similar to the subscription service, the automatic order service also includes the automatic shipping service. Hereinafter, the automatic order service and the subscription service may be collectively termed "the shipping services".

The service server 200 stores a service table 202 and a management table 204. In the service table 202, account information, serial numbers, and contract information are stored in association with each other. Each account information includes a user name and a password. Each serial number identifies a MFP (e.g., 100) used by the user indicated by the associated account information. Each contract information indicates a contract status of service used by the user indicated by the associated account information. For example, in case a user has been contracted to use the subscription service, the contract information indicates a value "Subscription". In case a user has been contracted to use the automatic order service, the contract information indicates a value "Automatic Order". In case a user has not contracted to use any services, the contract information indicates a value "None". The contract herein may be an online electronic contract without involving any paper contract documents or a contract involving paper contract documents. Further, "a user has been contracted to use a service" can be rephrased as "the user has already subscribed to the service", and "a user has not contracted to use a service" can be rephrased as "the use has not subscribed to the service yet".

The management table 204 manages operation statuses of multiple MFPs 100. In the management table 204, serial numbers, remaining amounts in color cartridges, numbers of used print sheets, and access tokens are stored in association with each other. Each number of used print sheets indicates a total of print sheets used by the MFP 100 identified by the associated serial number within the predetermined period of time. The access tokens are tokens issued by the service server 200 to the MFPs 100. The service server 200 uses the access tokens to establish always-on connections with the MFPs 100. The service server 200 periodically receives a remaining amount and number of used print sheets from each of the MFPs 100 through the always-on connections and updates the information in the management table 204. The always-on connections herein are, for example, an Extensible Messaging and Presence Protocol (XMPP) connections. The management table 204 may not store the numbers of used print sheets for users that have contracted to use the automatic order service.

The service server 200 may be a single server or a combination of multiple servers. For example, the service server 200 may be a combination of a server storing the service table 202 and a sever storing the management server 204.

### Configuration of Terminal Device 10: FIG. 1

The terminal device 10 comprises an operation unit 12, a display unit 14, a LAN interface 16, and a controller 30. Hereinafter, an interface is abbreviated as "I/F". The operation unit 12 is a user I/F through which a user can input various information to the terminal device 10. The operation unit 12 comprises, for example, a touch screen on which software keys (i.e., operation objects) are displayed, hardware keys, or both of them. The hardware keys are, for example, buttons or switches. The display unit 14 is a display or panel for displaying various information. The panel may be or may not be a touch screen. The panel is, for example, a liquid crystal panel or an organic EL panel. The LAN I/F 16 is an I/F for communication via the LAN 4 and is connected to the LAN 4.

The controller 30 comprises a CPU 32 and a memory 34. The memory 34 comprises a main storage and an auxiliary storage. The main storage includes a RAM and a cache memory, although this is merely an example. The auxiliary storage may be a ROM, a flash memory, a solid state drive (SSD), a hard disk drive (HDD), or any combination thereof, although this is merely an example. The CPU 32 executes various processes according to programs 40 and 42 loaded from the auxiliary storage to the main storage.

An OS program 40 and an application program 42 are stored in the auxiliary storage of the memory 34. Hereinafter, the application program 42 is abbreviated as "the app 42". The OS program 40 controls basic operations of the terminal device 10. The app 42 causes the MFPs 100 to execute the print function and the scan function. Further, the app 42 provides service-related information to the user.

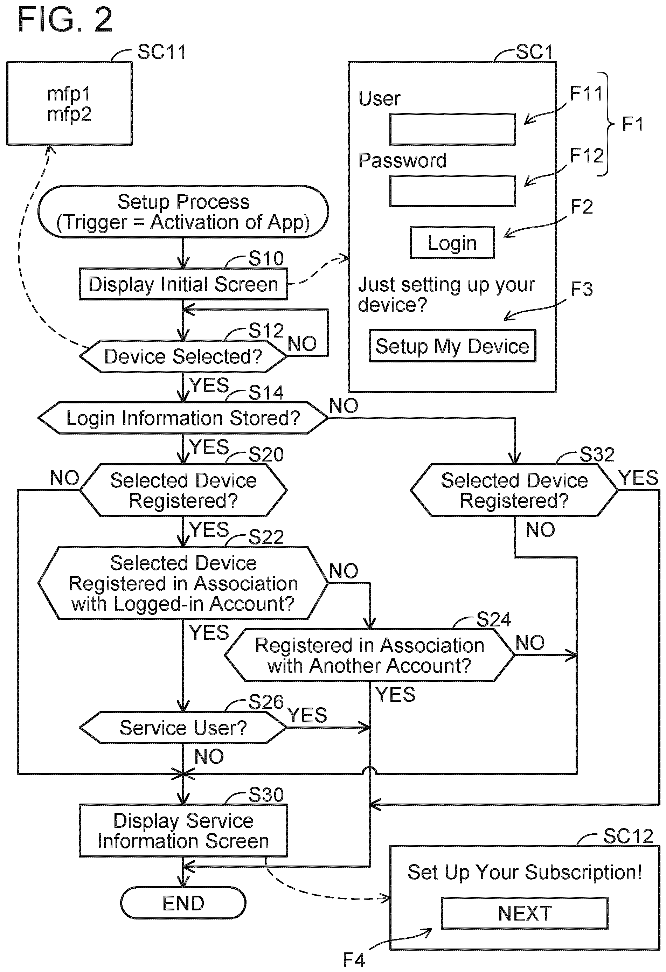

### Setup Process according to App 42: FIG. 2

Referring to FIG. 2, a process the CPU 32 executes according to the app 42 is described. The process of FIG. 2 is a setup process which is triggered by the app 42 being activated after the app 42 has been installed.

In S10, the CPU 32 causes the display unit 14 to display an initial screen SC1 which is an initial setting screen. The initial screen SC1 includes an account entry field F1, a login icon F2, and a device setting icon F3. The account entry field F1 is a field for input of account information. The account entry field F1 includes a user name entry field F11 and a password entry field F12. Instead of a user name, an e-mail address used by the user indicated by the user name may be input to the user name entry field F11. The login icon F2 is an icon for requesting a login based on the account information input to the account entry field F1. The device setting icon F3 is an icon for setting a peripheral device to be used, without requesting a login.

In response to the login icon F2 being selected by the user, the CPU 32 sends the service server 200 a login request including the account information input to the account entry field F1. In case authentication based on the account information included in the login request succeeds in the service server 200, the CPU 32 receives a token for the account information for which the authentication succeeded from the service server 200. This token is information used to establish a login session having a predetermined expiry period. The CPU 32 establishes the login session with the service server 200 using the token received from the service server 200. After establishing the login session, the CPU 32 stores the token received from the service server 200 in the memory 34 as login information. The login information may be the account information itself used for the current login. After establishing the login session, the CPU 32 causes the display unit 14 to display a device selection screen SC11 for selection of a peripheral device to be used.

The device selection screen SC11 includes a list of peripheral devices searched within the LAN 4 (e.g., a list including model names "mfp1" and "mfp2"). The user selects one peripheral device (e.g., an MFP 100 having the model name "mfp1") from the list in the device selection screen SC11. Thus, one peripheral device to be controlled by the app 42 (i.e., control target) is selected.

In response to the device setting icon F3 being selected by the user, the CPU 32 causes the display unit 14 to display the device selection screen SC11 without sending a login request to the service server 200. In other words, the user can use a peripheral device through the app 42 without the establishment of a login session with the service server 200.

In S12, the CPU 32 monitors whether one peripheral device is selected in the device selection screen SC11. The CPU 32 proceeds to S14 when determining that one peripheral device has been selected in the device selection screen SC11 (YES in S12). The CPU 32 continues the monitoring in S12 until one peripheral device is selected in the device selection screen SC11. For example, in case the model name "mfp1" is selected in the device selection screen SC11, the CPU 32 acquires, from the MFP 100 having the model name "mfp1", detailed information such as the serial number of the MFP 100 through the LAN 4. As a result, the information related to the control target of the app 42 is registered in the app 42. The number of peripheral devices registered in the app 42 as control target is not limited to one, and two or more peripheral devices may be registered in the app 42 as control targets.

In S14, the CPU 32 determines whether login information is in the memory 34. The CPU 32 proceeds to S20 in response to determining that login information is in the memory 34 (YES in S14).

In S20, the CPU 32 determines whether the peripheral device selected in the device selection screen SC11 (termed "selected device" hereinafter) has been already registered in the management table 204 in the service server 200. For example, if the selected device has already been registered in the management table 204 (i.e., if the serial number identifying the selected device has been stored in the management table 204), an access token is supposed to be stored in the selected device. Therefore, the CPU 32 queries the selected device as to whether an access token has been already stored there. In case the CPU 32 receives a response, from the selected device, indicating that an access token has been already stored, the CPU 32 determines that the selected device has been registered in the management table 204. In contrast, in case the CPU 32 receives a response, from the selected device, indicating that an access token has not been stored, the CPU 32 determines that the selected device has not been registered in the management table 204. In a modification, the CPU 32 may proceed to S22 without making the determination in S20.

The CPU 32 proceeds to S22 in response to determining that the selected device has been registered in the management table 204 (YES in S20). In S22, the CPU 32 determines whether the selected device has been registered in association with account information corresponding to the login information in the service table 202. For example, the CPU 32 sends an inquiry including the serial number of the selected device to the service server 200 through the login session. In case the serial number included in the inquiry has been already stored in the service table 202 and this serial number is associated with the account information corresponding to the login session in the service table 202, the service server 200 sends a response, to the terminal device 10, indicating that the selected device has been registered in association with the logged-in account information. In contrast, in case the serial number included in the inquiry has been already stored in the service table 202 but this serial number is associated with another account information in the service table 202, the service server 200 sends a response, to the terminal device 10, indicating that the selected device has been registered in association with the other account information. Further, in case the serial number included in the inquiry has not been stored in the service table 202, the service server 200 sends a response, to the terminal device 10, indicating that the selected device has not been registered in the service table 202. The CPU 32 makes a determination of YES in S22 in case the response to the inquiry in S22 indicates that the selected device has been registered in association with the logged-in account information. In a modification, the CPU 32 may receive a serial number stored in association with the logged-in account information from the service server 200 and determine whether the received serial number matches the serial number of the selected device.

The CPU 32 proceeds to S26 in response to determining that the selected device has been registered in association with the account information corresponding to the login information (YES in S22). In S26, the CPU 32 determines whether the user indicated by the account information corresponding to the login information has been contracted to use a service. For example, the CPU 32 queries the service server 200 as to the contract information registered in the service table 202 in association with the account information corresponding to the login information. In case a response from the service server 200 indicates "Subscription" or "Automatic Order", the CPU 32 determines that the user has been contracted to use a service. In contrast, in case the response from the service server 200 indicates "None", the CPU 32 determines that the user has not contracted to use any services.

The CPU 32 proceeds to S30 in response to determining that the user indicated by the logged-in account information has not been contracted to use any services (NO in S26). In S30, the CPU 32 causes the display unit 14 to display a service information screen SC12 that prompts the user to use the subscription service or the automatic order service. The service information screen SC12 may include a message prompting the user to subscribe to the subscription service or the automatic order service. This message reads, for example, "Set up your subscription!", "Try it now! subscription", "Would you like to subscribe to the subscription service?", "Why don't you subscribe to the subscription service?", or "Would you like to subscribe to the automatic order service?". The service information screen SC12 may further include an icon F4 for proceeding to a process to subscribe to each service. In response to the icon F4 being selected, the CPU 32 may cause the display unit 14 to display a screen for input of information required to subscribe to each service (e.g., a credit card number, a contractor name, etc.). At the completion of S30, the CPU 32 ends the process of FIG. 2. Alternatively, in case the user indicated by the logged-in account information has been contracted to use a service (YES in S26), the CPU 32 may skip S30 and ends the process of FIG. 2.

The CPU 32 proceeds to S24 in response to determining that the selected device has not been registered in association with the logged-in account information (NO in S22). In S24, the CPU 32 determines whether the response to the inquiry in S22 indicates that the selected device has been registered in association with another account information. In response to determining that the response to the inquiry in S22 indicates that the selected device has been registered in association with another account information (YES in S24), the CPU 32 skips S26 and S30 and ends the process of FIG. 2. In contrast, in response to determining that the response to the inquiry in S22 indicates that the selected device has not been registered in the service table 202 (NO in S24), the CPU 32 skips S26 and proceeds to S30.

In response to determining that the selected device has not been registered in the management table 204 (NO in S20), the CPU 32 skips S22 to S26 and proceeds to S30.

In response to determining that the login information is not in the memory 34 (NO in S14), the CPU 32 proceeds to S32. S32 is the same as S20. The CPU 32 proceeds to S30 in response to determining that the selected device has not been registered in the management table 204 (NO in S32). In contrast, the CPU 32 skips S30 and ends the process of FIG. 2 in response to determining that the selected device has been registered in the management table 204 (YES in S32).

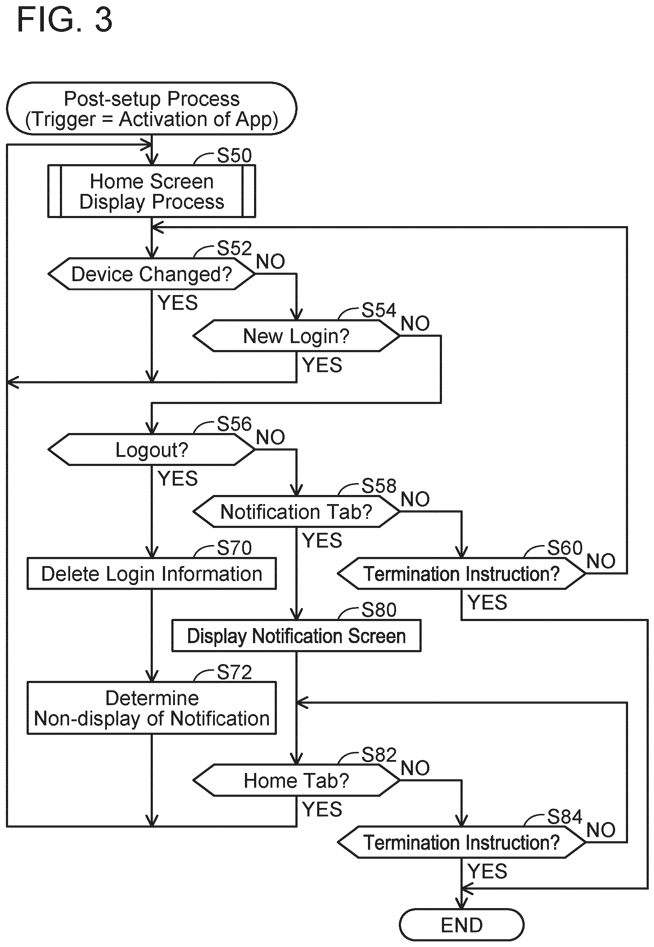

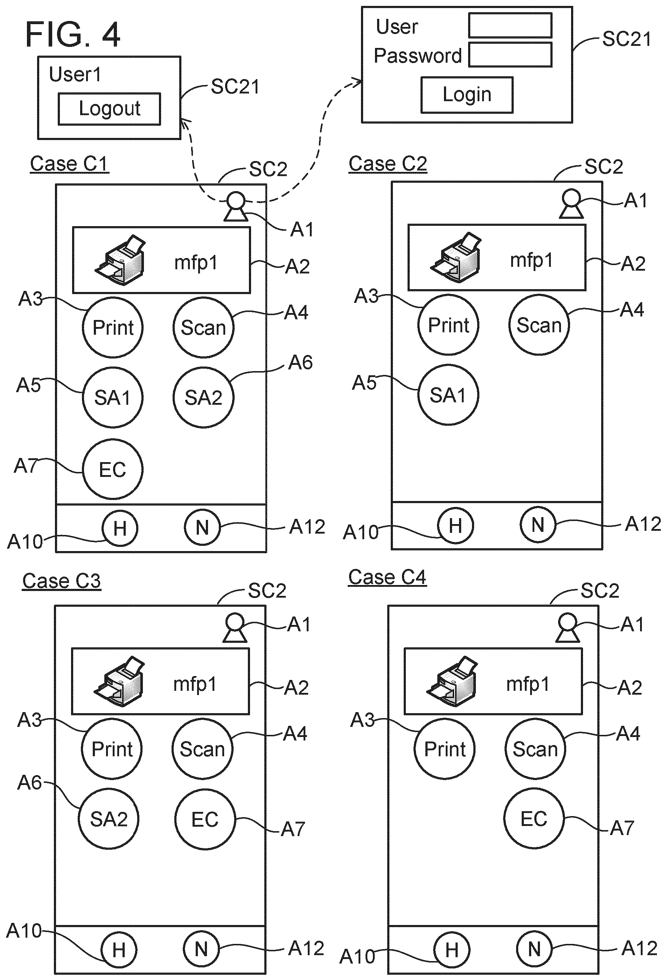

### Post-setup Process: FIGS. 3 and 4

The process of FIG. 3 follows the process of FIG. 2. The process of FIG. 3 is executed according to the app 42 and triggered by activation of the app 42. In the process of FIG. 3, a home screen SC2 is displayed. Before describing the process of FIG. 3, the home screen SC2 is described with reference to FIG. 4.

The home screen SC2 displays an account icon A1, a device icon A2, a print icon A3, a scan icon A4, a home tab A10, and a notification tab A12. The home screen SC2 may further display a subscription icon A5, an automatic order icon A6, and an EC icon A7.

The account icon A1 is an icon for receiving an instruction related to account information. In response to the account icon A1 being selected, the CPU 32 causes the display unit 14 to display an account screen SC21. In case the user is currently logged in the service server 200, the account screen SC21 displays the logged-in user name and an icon for logout from the service server 200. In contrast, in case the user is not logged in the service server 200, the account screen SC21 displays an icon for login to the service server 200.

The device icon A2 is an icon for receiving an instruction related to the selected device. The device icon A2 shows the model name of the selected device. In the examples illustrated in FIG. 4, the model name "mfp1" is shown. In a modification, instead of the model name, the IP address or serial number of the selected device may be shown. In response to the device icon A2 being selected, the CPU 32 causes the display unit 14 to display a device change screen for changing the selected device from the current control target to another control target. The device change screen includes a list of one or more control targets registered in the app 42. In response to one control target being selected from the list, the selected device is changed from the current control target to the other control target.

The print icon A3 is an icon for receiving an instruction to send a print execution instruction to the selected device. The scan icon A4 is an icon for receiving an instruction to send a scan execution instruction to the selected device.

The subscription icon A5 is an icon for receiving an instruction related to the subscription service. In response to the subscription icon A5 being selected, the CPU 32 causes the display unit 14 to display a webpage related to the subscription service. In case the user has been contracted to use the subscription service, the webpage displays, for example, information on contract details and an icon for receiving an instruction to change the contract. The contract details include, for example, a remaining amount in color material cartridge, the cumulative number of used print sheets, the serial number registered in the service table 202, the number of print sheets used by the MFP 100 identified by the serial number per unit of time, and a charge per predetermined period of time. In case the user has not been contracted to use the subscription service, the webpage displays, for example, information on the subscription service and an icon for subscription to the subscription service. The webpage may be displayed by the app 42 or by a browser program different from the app 42.

The automatic order icon A6 is an icon for receiving an instruction related to the automatic order service. In response to the automatic order icon A6 being selected, the CPU 32 causes the display unit 14 to display a webpage related to the automatic order service. In case the user has been contracted to use the automatic order service, the webpage displays, for example, information on contract details and an icon for receiving an instruction to change the contract. In contrast, in case the user has not been contracted to use the automatic order service, the webpage displays, for example, information on the automatic order service and an icon for subscription to the automatic order service.

The EC icon A7 is an icon for receiving an instruction to access an EC site that sells color material cartridges. In response to the icon A7 being selected, the CPU 32 causes the display unit 14 to display the EC site. The EC site may be displayed by the app 42 or a browser program. The EC site may be provided by the vendor of the peripheral devices or a vendor different from the vendor of the peripheral devices.

The home tab A10 is a tab for displaying the home screen SC2. The notification tab A12 is a tab for displaying a notification screen (not illustrated) showing service-related notifications. The home tab A10 and the notification tab A12 are not limited to tabs as illustrated in FIG. 4 and may be icons or buttons. The notification screen also includes the home tab A10 and the notification tab A12. For example, in response to the notification tab A12 being selected on the home screen SC2, the CPU 32 causes the display unit 14 to display the notification screen instead of the home screen SC2. In another example, in response to the home tab A10 being selected on the notification screen, the CPU 32 causes the display unit 14 to display the home screen SC2 instead of the notification screen.

The home screens SC2 illustrated in FIG. 4 are merely examples. For example, one or more additional icons may be added to the home screens SC2. The one or more additional icons include, for example, an icon for receiving an instruction related to another service different from the subscription service and the automatic order service. The other service is, for example, a warranty service for the MFPs 100.

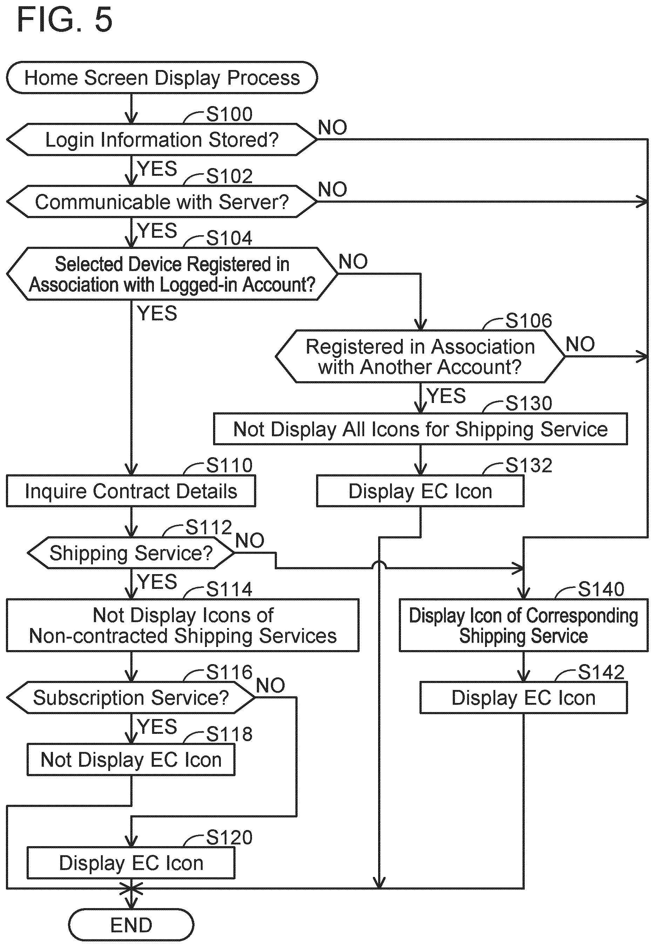

Referring back to FIG. 3, the process of FIG. 3 is described. In S50, the CPU 32 executes a home screen display process to display the home screen SC2. In the home screen display process, the content displayed on the home screen SC2 is changed. The home screen display process will be detailed later with reference to FIG. 5.

In S52, the CPU 32 determines whether the device icon A2 has been selected to change the selected device to another control target. The CPU 32 returns to S50 in response to determining that the selected device has been changed to another control target (YES in S52). That is, every time the selected device is changed, the content on the home screen SC2 is updated.

The CPU 32 proceeds to S54 in response to determining that the selected device has not been changed to another control target (NO in S52). In S54, the CPU 32 determines whether the account icon A1 has been selected to establish a new login session with the service server 200. The CPU 32 returns to S50 in response to determining that a new login session has been established (YES in S54). That is, every time a new login session is established, the content on the home screen SC2 is updated.

The CPU 32 proceeds to S56 in response to determining that a new login session has not been established (NO in S54). In S56, the CPU 32 determines whether the account icon A1 has been selected to terminate the currently established login session for the user to log out. The CPU 32 proceeds to S70 in response to determining that the user has logged out (YES in S56).

In S70, the CPU 32 deletes the login information from the memory 34. Then, in S72, the CPU 32 determines that a service-related notification is not to be displayed on the notification screen. When S72 is completed, the CPU 32 returns to S50. That is, every time the user logs out, the content on the home screen SC2 is updated.

The CPU 32 proceeds to S58 in response to determining that the user has not logged out (NO in S56). In S58, the CPU 32 determines whether the notification tab A12 in the home screen SC2 has been selected. The CPU 32 proceeds to S80 in response to determining that the notification tab A12 has been selected (YES in S58).

In S80, the CPU 32 causes the display unit 14 to display the notification screen. Then, in S82, the CPU 32 determines whether the home tab A10 in the notification screen has been selected. The CPU 32 returns to S50 in response to determining that the home tab A10 has been selected (YES in S82). That is, every time the notification screen is switched to the home screen SC2, the content on the home screen SC2 is updated.

The CPU 32 proceeds to S84 in response to determining that the home tab A10 has not been selected (NO in S82). In S84, the CPU 32 determines whether a termination instruction to terminate the app 42 has been received. The CPU 32 ends the process of FIG. 3 in response to determining that the termination instruction has been received (YES in S84), while the CPU 32 returns to S82 in response to determining that the termination instruction has not been received (NO in S84).

The CPU 32 proceeds to S60 in response to determining that the notification tab has not been selected (NO in S58). S60 is the same as S84. The CPU 32 ends the process of FIG. 3 in response to determining that the termination instruction has been received (YES in S60), while the CPU 32 returns to S52 in response to determining that the termination instruction has not been received (NO in S60).

### Home Screen Display Process: FIG. 5

S100 is the same as S14 in FIG. 2. The CPU 32 proceeds to S102 in response to determining that the login information is in the memory 34 (YES in S100).

In S102, the CPU 32 determines whether the terminal device 10 is communicable with the service server 200. The CPU 32 proceeds to S104 in response to determining that the terminal device 10 is communicable with the service server 200 (YES in S102).

S104 is the same as S22 in FIG. 2. The CPU 32 proceeds to S110 in response to determining that the selected device has been registered in the service table 202 in association with the account information corresponding to the login information (YES in S104). In S110, the CPU 32 queries the service server 200 about the content of contract information associated with the account information corresponding to the login information in the service table 202.

In S112, the CPU 32 determines whether a response to the inquiry in S110 indicates that the user has been contracted to use a shipping service. In case the response indicates "Subscription" or "Automatic Order", the CPU 32 determines that the response indicates the user has been contracted to use a shipping service.

The CPU 32 proceeds to S114 in response to determining that the response to the inquiry in S110 indicates that the user has been contracted to use a shipping service (YES in S112). In S114, the CPU 32 causes the display unit 14 to display a home screen SC2 that displays an icon related to the contracted shipping service and does not display an icon related to non-contracted shipping service.

For example, in Case C2 illustrated in FIG. 4 where the user has been contracted to use the subscription service, the CPU 32 causes the display unit 14 to display a home screen SC2 that displays the subscription icon A5 and does not display the automatic order icon A6. For example, in Case C3 illustrated in FIG. 4 where the user has been contracted to use the automatic order service, the CPU 32 causes the display unit 14 to display a home screen SC2 that displays the automatic order icon A6 and does not display the subscription icon A5.

In S116, the CPU 32 determines whether the response to the inquiry in S110 indicates "Subscription". The CPU 32 proceeds to S118 in response to determining that the response to the inquiry in S110 indicates "Subscription" (YES in S116). In S118, the CPU 32 causes the display unit 14 to display a home screen SC2 that does not display the EC icon A7 (see Case C2 in FIG. 4).

The CPU 32 proceeds to S120 in response to determining that the response to the inquiry in S110 indicates "Automatic Order" (NO in S116). In S120, the CPU 32 causes the display unit 14 to display a home screen SC2 that displays the EC icon A7 (see Case C3 in FIG. 4). The CPU 32 ends the process of FIG. 5 when S118 or S120 is completed.

The CPU 32 proceeds to S140 in response to determining that the response to the inquiry in S110 indicates that the user has not been contracted to use any of the shipping services (NO in S112). In S140, the CPU 32 causes the display unit 14 to display a home screen SC2 that displays one of the subscription icon A5 and the automatic order icon A6 that corresponds to the service usable by the selected device. S142 is the same as S120.

For example, the selected device may be able to use the automatic order service but may not be able to use the subscription service because the selected device may not be able to use a subscription service-dedicated color material cartridge shipped through the subscription service. For example, in case the subscription service is not usable by the selected device, the home screen SC2 displays the automatic order icon A6 and does not display the subscription icon A5. That is, in case the CPU 32 makes the determination of NO in S112 and the subscription service is not usable by the selected device, the home screen SC2 for Case C3 illustrated in FIG. 4 is displayed.

The CPU 32 proceeds to S106 in response to determining that the selected device has not been registered in the service table 202 in association with the account information corresponding to the login information (NO in S104). S106 is the same as S24 in FIG. 2. The CPU 32 proceeds to S130 in response to determining that the response to the inquiry in S104 indicates that the selected device has been registered with another account information (YES in S106).

In S130, the CPU 32 causes the display unit 14 to display a home screen SC2 that does not display any of the icons related to the shipping services, i.e., both the subscription icon A5 and the automatic order icon A6. S132 is the same as S120. That is, in case the determination of YES is made in S106, the home screen SC2 for Case C4 illustrated in FIG. 4 is displayed. The CPU 32 ends the process of FIG. 5 when S132 is completed.

The CPU 32 proceeds to S140 in response to determining that the response to the inquiry in S104 indicates "None" (NO in S106).

### Advantageous Effects of Embodiment

For example, a comparative example can be assumed where the home screen SC2 displays both the subscription icon A5 and the automatic order icon A6 in case the selected device has been registered for the subscription service. In this comparative example, the user may start using the automatic order service despite the selected device having been registered for the subscription service. In contrast, according to the configuration described above, the home screen SC2 does not display the automatic order icon A6 in case the selected device has been registered for the subscription service. This prevents the user from starting to use the automatic order service. Thus, the user is prompted to use the subscription service. Further, the non-display of the automatic order icon A6 on the home screen SC2 in case the selected device has been registered for the subscription service also prevents the automatic shipping service from being redundantly provided to the same selected device.

As described above, the subscription service may involve use of dedicated color material cartridges. If the user who has been contracted to use the subscription service purchases a commonly available color material cartridge on the EC site and attaches it to the selected device, proper information required to provide the service (e.g., the number of used print sheets) may not be sent to the service server 200. In this case, the subscription service may not be properly provided to the user. In contrast, color material cartridges shipped through the automatic order service are the same as the commonly available color material cartridges. In the above embodiment, proper provision of the subscription service can be prompted by not displaying the EC icon A7 on the home screen SC2 in case the selected device has been contracted to use the subscription service (S118).

When the selected device has been registered in association with another account information, the selected device cannot be registered in association with the logged-in account information in order to prevent the automatic shipping service from being provided redundantly to the same selected device. For example, a comparative example is assumed where the home screen SC2 displays both the subscription icon A5 and the automatic order icon A6 in S130. In this comparative example, in response to one of the icons A5 and A6 being selected, a webpage that prompts contract of the shipping service may be displayed despite such a contract being unable to be concluded. This may cause confusion to the user. In the embodiment above, all the icons related to the shipping services are not displayed in the home screen SC2 in case the selected device has been registered in association with another account information (S130). Thus, the user is prevented from proceeding with making a contract for a shipping service.

### Correspondence Relationships

The app 42, the CPU 32, and the terminal device 10 are examples of "computer-readable instructions", "processor", and "terminal device", respectively. The MFP 100 is an example of "image processing device". The home screen SC2 is examples of "predetermined screen" and "icon screen". The color material cartridge is an example of "consumable article". The subscription service and the automatic order service are an example of "plurality of shipping services". One of the subscription service and the automatic order service is an example of "specific shipping service". The automatic order service and the subscription service are examples of "first shipping service" and "second shipping service", respectively. The subscription icon A5 and the automatic order icon A6 are an example of "plurality of icons". One of the subscription icon A5 and the automatic order icon A6 is an example of "specific icon". The EC icon A7 is an example of "access icon". Case C1 in FIG. 4 is an example of "first mode". Case C2 and Case C3 in FIG. 4 are examples of "second mode". The process in FIG. 5 is an example of "a display control unit ".

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below.

### Modification 1

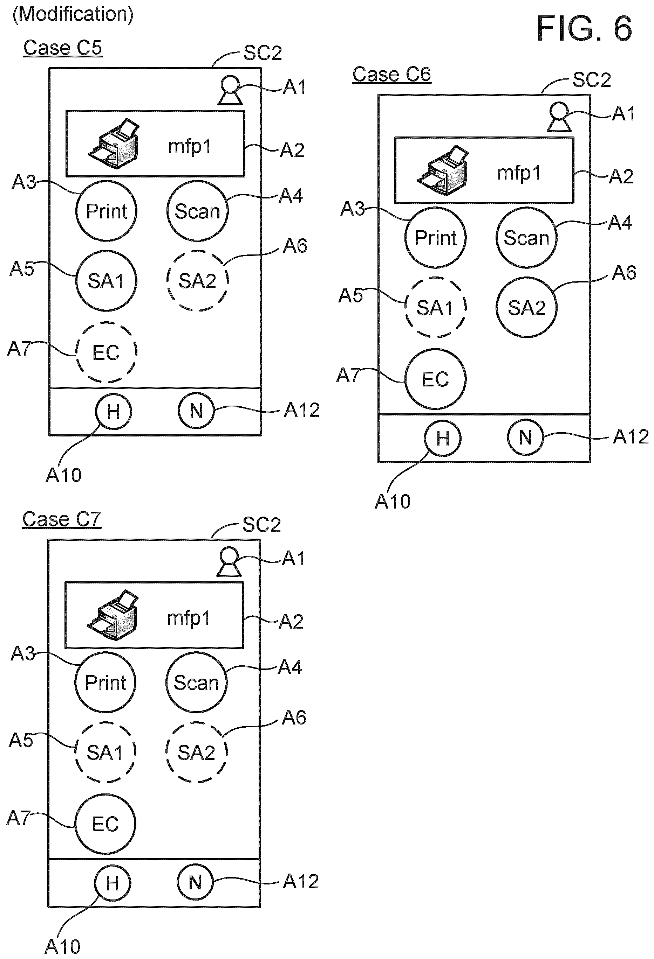

In the embodiment, the terminal device 10 does not display an icon related to non-contracted shipping service (e.g., the automatic order icon A6) in S114 of FIG. 5. Instead of this, the terminal device 10 may display the icon related to the non-contracted shipping service in a gray-out manner. Case C5 illustrated in FIG. 6 shows the automatic order icon A6 displayed in the gray-out manner, and Case C6 illustrated in FIG. 6 shows the subscription icon A5 displayed in the gray-out manner. The dashed lines indicate the gray-out manner. Even when an icon displayed in the gray-out manner is selected, an action corresponding to the selected icon (e.g., display of a webpage) is not executed. That is, icons displayed in the gray-out manner are unreactive to user's instructions. In this modification, displaying an icon in the gray-out manner is an example of "second mode", and a normal, non-gray-out manner and the gray-out manner are examples of "first manner" and "second manner", respectively.

Also, as illustrated in Case C5 of FIG. 6, the EC icon A7 may be displayed in the gray-out manner. Case C7 illustrated in FIG. 6 shows a modification where both the subscription icon A5 and the automatic order icon A6 are displayed in the gray-out manner in S130 of FIG. 5.

### Modification 2

The "computer-readable instructions" is not limited to the app 42 in the terminal device 10 and may be computer-readable instructions for controlling a server communicable with the terminal device 10. In this embodiment, the server may cause the terminal device 10 to display the predetermined screen by sending screed data corresponding to the predetermined screen to the terminal device 10 according to the computer-readable instructions. Further, the "control device" is not limited to the terminal device 10 and may be the server described above.

### Modification 3

The "image processing device" is not limited to the MFP 100 and may be, for example, a printer that does not have the scan function.

### Modification 4

The "predetermined screen" is not limited to the home screen displaying icons and may be, for example, a notification screen displaying a service-related notification. In this modification, the terminal device 10 may display a notification screen that does not display a notification related to the automatic order service in case the user has been contracted to use the subscription service.

### Modification 5

S106, S130, and S132 in FIG. 5 may not be executed. In this modification, the "third mode" may be omitted.

### Modification 5

The "consumable article" is not limited to the color material cartridge and may be, for example, a component to be replaced or printing paper.

### Modification 6

In the embodiment described above, the service server 200 is illustrated and described as a physical server but this need not always be the case. For example, the service server 200 may be, for example, a virtual server or a virtual machine. Alternatively, the service server 200 may be a server on an intranet or a cloud server on the internet. The service server 200 may be established on the internet by a business operator different from the vendor. In another modification, the vendor may use an environment provided by an external cloud computing service without preparing hardware for the service server 200. In this case, the vendor may prepare computer-readable instructions (i.e., software) for the service server 200 and introduce them into the above environment to implement the service server 200.

### Modification 7

In the embodiment described above, the processes in FIGS. 2 to 6 are implemented by the CPU 32 executing the programs 40 and 42. Instead of this, at least one of the processes may be implemented by hardware such as a logic circuit.

## Claims

1. A computer program (42) for a control device (30), wherein the computer program (42) causes a processor (32) of the control device (30) to function as
a display control unit (32) configured to cause a terminal device (10) to display a predetermined screen (SC2) related to an image processing device (100) communicable with the terminal device (10),
wherein in a case where the image processing device (10) has not registered for any of a plurality of shipping services for shipping a consumable article used in the image processing device (100), the predetermined screen (SC2) is displayed in a first mode capable of receiving operation to use any of the plurality of shipping services by a user of the terminal device (10), and
in a case where the image processing device (100) has registered for a specific shipping service among the plurality of shipping services, the predetermined screen (SC2) is displayed in a second mode that permits use of the specific shipping service by the user and restricts use of other shipping services other than the specific shipping service among the plurality of shipping services.

2. The computer program (42) according to claim 1, wherein
the predetermined screen (SC2) is an icon screen displaying an icon for receiving an instruction from the user.

3. The computer program (42) according to claim 2, wherein
in the first mode, the icon screen (SC2) displays a plurality of icons (A5, A6) corresponding to the plurality of shipping services, and
in the second mode, the icon screen (SC2) displays a specific icon (A6) corresponding to the specific shipping service among the plurality of icons (A5, A6) and does not display other icons (A5) other than the specific icon (A6) among the plurality of icons (A5, A6).

4. The computer program (42) according to claim 3, wherein
in a case where the icon screen (SC2) is in the second mode and the specific shipping service is a first shipping service, the icon screen (SC2) displays the specific icon (A6) corresponding to the first shipping service and an access icon (A7) for receiving an instruction to access a website for purchasing the consumable article, and
in a case where the icon screen (SC2) is in the second mode and the specific shipping service is a second shipping service different from the first shipping service, the icon screen (SC2) displays the specific icon (A5) corresponding to the second shipping service and does not display the access icon.

5. The computer program (42) according to claim 2, wherein
when the icon screen (SC2) is in the first mode, the icon screen (SC2) displays a plurality of icons (A5, A6) corresponding to the plurality of shipping services in a first manner that is reactive to the instruction from the user,
when the icon screen (SC2) is in the second mode, the icon screen (SC2) displays a specific icon (A6) corresponding to the specific shipping service among the plurality of icons (A5, A6) in the first manner and other icons (A5) other than the specific icon among the plurality of icons (A5, A6) in a second manner that is unreactive to the instruction from the user.

6. The computer program (42) according to claim 5, wherein
in a case where the icon screen (SC2) is in the second mode and the specific shipping service is a first shipping service, the icon screen displays both of the specific icon (A6) corresponding to the first shipping service and an access icon (A7) for receiving an instruction to access a website for purchasing the consumable article in the first manner, and
in a case where the icon screen (SC2) is in the second mode and the specific shipping service is a second shipping service different from the first shipping service, the icon screen (SC2) displays the specific icon (A5) corresponding to the second shipping service in the first manner and the access icon (A7) in the second manner.

7. The computer program (42) according to any one of claims 1 to 6, wherein
in a case where the image processing device (100) has registered for the specific shipping service and the image processing device (100) is registered in association with specific account information used by the terminal device (10) to log in, the predetermined screen (SC2) is displayed in the second mode, and
in a case where the image processing device (100) is registered in association with other account information that is not used by the terminal device (10) to log in, the predetermined screen (SC2) is displayed in a third mode that restricts use of all the plurality of shipping services.

8. A control device (30) comprising:
a display control unit (32) configured to cause a terminal device (10) to display a predetermined screen (SC2) related to an image processing device (100) communicable with the terminal device (10),
wherein in a case where the image processing device (100) has not registered for any of a plurality of shipping services for shipping a consumable article used in the image processing device (100), the predetermined screen (SC2) is displayed in a first mode capable of receiving operation to use any of the plurality of shipping services by a user of the terminal device (10), and
in a case where the image processing device (100) has registered for a specific shipping service among the plurality of shipping services, the predetermined screen (SC2) is displayed in a second mode that permits use of the specific shipping service by the user and restricts use of other shipping services other than the specific shipping service among the plurality of shipping services.

9. A method of causing a terminal device (10) to display a predetermined screen (SC2) related to an image processing device (100) communicable with the terminal device (10), wherein
the method comprising:
in a case where the image processing device (100) has not registered for any of a plurality of shipping services for shipping a consumable article used in the image processing device (100), causing the terminal device (10) to display the predetermined screen (SC2) in a first mode capable of receiving operation to use any of the plurality of shipping services by a user of the terminal device (10), and
in a case where the image processing device (100) has registered for a specific shipping service among the plurality of shipping services, causing the terminal device (10) to display the predetermined screen (SC2) in a second mode that permits use of the specific shipping service by the user and restricts use of other shipping services other than the specific shipping service among the plurality of shipping services.
